# EUROPEAN PATENT SPECIFICATION

(11) **EP 1 884 474 B1**
(45) Date of publication and mention of the grant of the patent: **04.09.2013**
(21) Application number: 07014983.6
(22) Date of filing: 31.07.2007
(51) Int. Cl.: B65D 1/40, B29C 45/44

(54) **Molded container of plastic material, manufacturing process and mold therefor**
Geformter Behälter aus Kunststoff, Verfahren und Form zu dessen Herstellung
Récipient moulé en plastique, procédé de fabrication et moules pour sa réalisation

(30) Priority: 04.08.2006 IT TO20060579
(43) Date of publication of application: 06.02.2008
(73) Proprietor: PIBER GROUP S.r.l., 27058 Voghera (Pavia) (IT)
(72) Inventor: Bergaglio, Marco, 27058 Voghera (Pavia) (IT)
(74) Representative: Cian, Paolo

(56) References cited:
- EP-A2- 1 346 920
- CA-A- 1 150 469
- FR-A5- 2 229 243
- GB-A- 858 887
- NL-C2- 1 008 865

## Description

The present invention generally relates to molded containers of plastic material, which may be used, for example, for packaging foods.

More particularly, the invention refers to a container according to the preamble of claim 1.

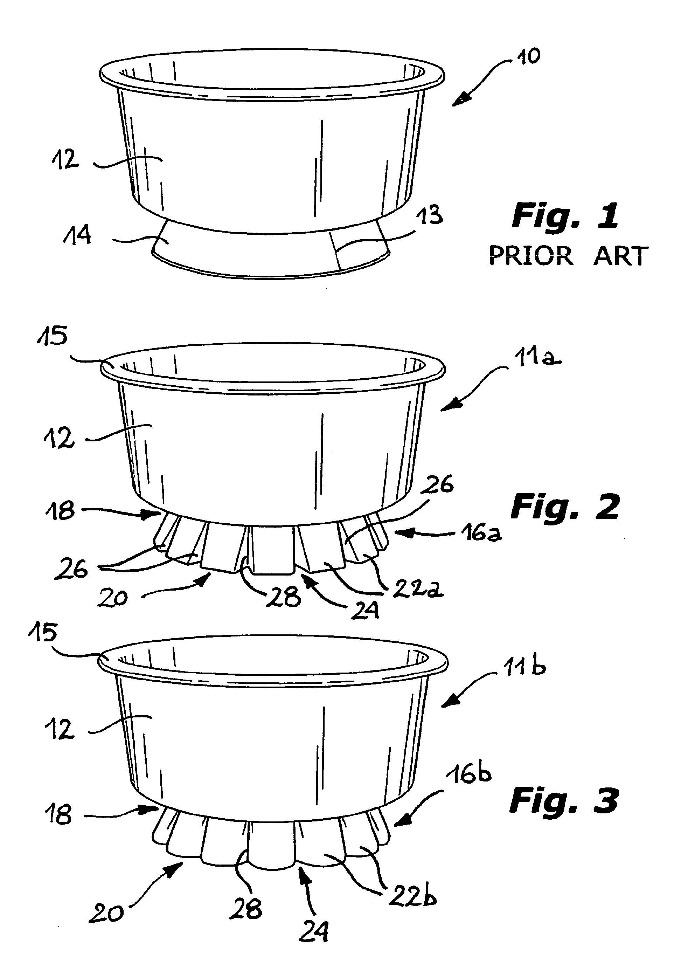

A container of the known type defined above is shown for example in appended figure 1. This container, indicated as a whole by reference numeral 10, comprises a cup portion 12 which constitutes a vessel adapted to contain for example a food, below which a conical support base 14 extends, formed as an undercut with respect to the cup portion 12.

The manufacturing of the container 10 by molding a plastic material, in particular in order to allow that the support base 14 is formed, involves the arrangement of a complex mold which includes an intermediate mold constituted by two opposite semicircular half-molds movable on a plane perpendicular to the general axis of the container 10 as a result of the driving of transversely slidable carriages.

The presence of the two transversely movable half-molds increases the cost of the mold and, consequently, also the cost of the containers obtained by it. Because of the transverse movement of the carriages for controlling the movement of the two semicircular half-molds taking place during the opening of the mold, the molding time required for each container turn out to be relatively high. Moreover, marks are originated on the outer sidewall of the conical support base of the container at the zones of contact of the two transversely movable half-molds, owing to the burr of the plastic material, one of which is indicated 13 in figure 1, which make the container little accurate from an aesthetic point of view and which may therefore turn out to be unpleasant.

With the aim of overcoming these drawbacks, the subject of the invention is a container having the features mentioned in claim 1.

By virtue of such characteristics, the container of the invention can be made at a lower cost and with a shorter molding time with respect to known containers, without any noticeable aesthetic imperfection on the support base thereof, even though it allows to attain at the same time the optimal support and bearing of the cup portion of the container.

Moreover, the subject of the invention are both a molding process for a molded container of plastic material, and a mold which can be used for the manufacturing thereof.

Further characteristics and advantages of the invention will turn out to be more apparent from reading the following detailed description, provided as a non-limitative example and referred to the appended drawings, in which:
- figure 1 is a perspective view of a container according to the prior art,
- figures 2 and 3 are views similar to figure 1, which show two modifications of a container according to the invention, respectively,
- figure 4 is a sectional side elevational view of a mold which can be used for molding a container according to the invention, in the closed molding configuration,
- figure 5 is a view similar to figure 4, which show a first opening step of the mold of figure 4,
- figure 6 is an enlarged sectional side elevational view which points out the opening step of an intermediate mold defining the undercut portion of the container,
- figures 7 to 9 are views similar to figure 5 which show subsequent steps of the opening of the mold, up to the ejection of the container from the mold, respectively,
- figure 10 is a view similar to figure 1 of another modification of a container according to the invention, and
- figure 11 is a lower elevational view of the container of figure 11, from arrow XI of figure 10.

With initial reference to figures 2 and 3, a container 11a or 11b according to the invention is made by a thin-walled molded plastic material, for example polystyrene or polypropylene.

According to an embodiment of the invention, the container 11a or 11b may have a substantially circular symmetry, and comprises a cup portion 12 defining a container for a product, typically of a food type, which can be closed by a cover (not shown in the figures) for example of the film type, sealed along its edge at a peripheral collar 15 of the portion 12, which can be usually opened by peeling off.

Below the cup portion 12, the container 11a or 11b comprises a flared support portion, respectively indicated 16a or 16b, which extends between a restricted section 18 adjacent to the base of the cup portion 12 and an enlarged end section 20, and is formed as an undercut with respect to the portion 12.

As a rule, the flared portion 16a or 16b has a substantially corrugated shape, which tapers between the aforesaid narrow and enlarged sections 18, 20, being defined by a plurality of wall segments separated by recesses. In this manner, the portion 16a or 16b turns out to be easily flexible and such as to be able to undergo an elastic contraction at least in a direction transverse to the general axis of the container 11a or 11b, on the whole circumference thereof.

With particular reference to figure 2, each wall segment which defines the flared support portion 16a consists of a flat plate 22a tilted with respect to the general axis of the container 11a . Respective triangular gussets 26 extends from the side edges of each flat plate 22a, in an almost radial direction, a pair of gussets 26 of two consecutive flat plates 22a being connected at an edge thereof so as to form a corner 28 which bounds a radial recess 24 interposed between two adjacent plates 22a.

According to the modification shown in figure 3, the flared support portion 16b of the container 11b is defined by a plurality of wall segments each of which consists of a sheet 22b substantially shaped as a frustoconical lobe, the side ends of two consecutive shaped sheets 22b being connected at a corner 28 in order to bound a radial recess 24 interposed between two adjacent sheets 22b.

The corners 28 of both the flared portions 16a and 16b, are preferably parallel to the general axis of the container 11a or 11b, so as to be substantially tangent to a cylinder of envelope coaxial with the axis of the relevant container.

Moreover, both the flat sheets 22a and the shaped sheets 22b generally extend according to a conical envelope with respect to the general axis of the container 11a or 11b. In particular, the side edges of the flat sheets 22a are tangent to a cone coaxial with the axis of the container 11a, while at least an intermediate rear portion of the shaped sheets 22b is tangent to a cone coaxial with the axis of the container 11b.

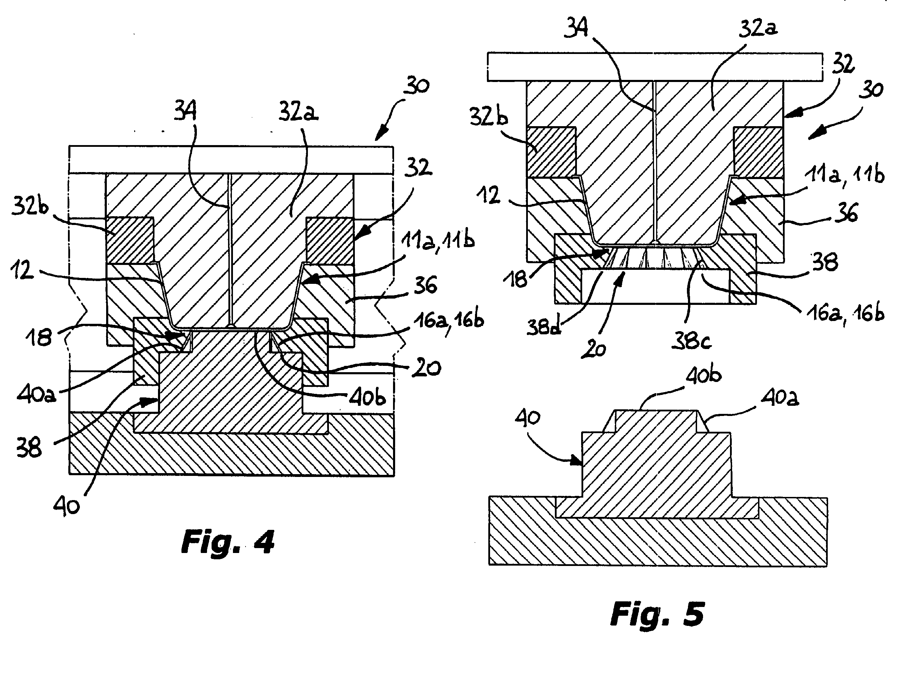

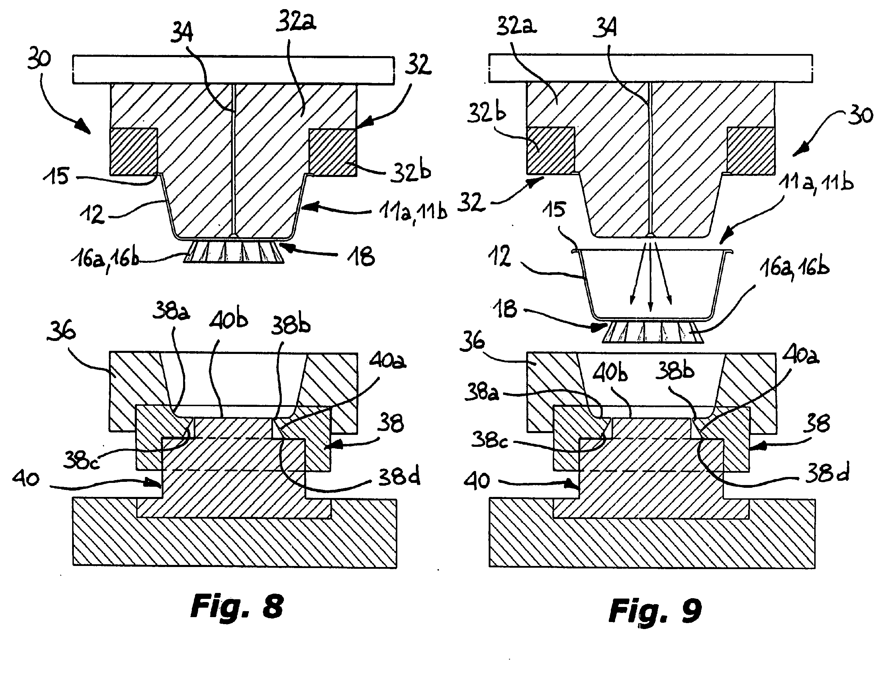

With reference to figures 4 to 9, a mold 30 adapted to form the container 11a or 11b by means of a molding process, typically by injection, comprises a series of molds which, in their closed configuration, bound a molding cavity the shape of which corresponds to that of the container 11a or 11b.

In particular, the mold 30 comprises a first male mold 32 which includes a convex portion 32a susceptible to bound the inner surface of the cup portion 12 and a portion of the peripheral collar 15, as well as an annular portion 32b adapted to define the upper and radially outermost portion of the collar 15, and a female annular mold 36 intended to bound a main portion of the outer side surface of the cup portion 12 as well as the lower portion of the collar 15. Usually, an axial duct 34 is formed in the convex portion 32a of the male mold 32, which communicates with feeding means (not shown) for feeding compressed air, which purpose will be made clearer in the following.

Moreover, the mold 30 includes an intermediate annular mold 38 provided with a concave upper molding surface 38a adapted to define a portion of the bottom surface of the cup portion 12, which ends at an annular corner 38b which defines a restriction corresponding to the restricted section 18 of the undercut portion of the container 11a or 11b. At the opposite side of the concave surface 38a with respect to the corner 38b, a shaped molding surface 38c extends, which is adapted to bound the outer surface of the flared corrugated portion 16a or 16b of the container 11a or 11b, and which defines a rim formation in which wall segments and recesses alternates, which ends at an enlarged edge 38d corresponding to the enlarged end section 20 of the flared portion 16a or 16b of the container 11a or 11b.

Below the intermediate mold 38, a second male mold 40 is arranged, which is provided with a shaped molding surface 40a whose shape is complementary to the shaped surface 38c of the intermediate mold 38, which bounds the inner surface of the corrugated flared portion 16a or 16b of the container 11a or 11b, and a substantially flat transverse surface 40b adapted to bound the lower face of the bottom wall of the cup portion 12.

In particular, the molds 32, 36, 38 and 40 are coaxial to each other and can be relatively moved only in the axial direction of the container 11a or 11b.

In the mold 30 intended to form the container 11a or 11b provided with its support base 16a or its support base 16b, the shaped surfaces 38c and 40a of the molds 38 and 40, respectively, define respective corrugated tapered portions comprising a plurality of wall segments which consists of tilted flat sheets 22a with triangular gussets 26 extending from the respective side ends, or of sheets 22b shaped as frustoconical lobe, radial recesses 24 being interposed between pairs of adjacent sheets 22a or 22b.

During the molding process of the container 11a or 11b, the plastic material to be molded, usually by injection, is introduced in the molding cavity bounded by the mold 30 in its closed configuration. At the end of the molding, the various elements of the mold 30 are opened according to a predetermined sequence in order to allow the extraction of the container 11a or 11b.

Initially, beginning from the closed configuration of the mold 30, the second male mold 40 is moved away axially with respect to the unit formed by the intermediate mold 38, the female mold 36 and the first male mold 32, in order to make free the inner surface of the undercut portion 16a or 16b of the container 11a or 11b and the lower face of its bottom wall.

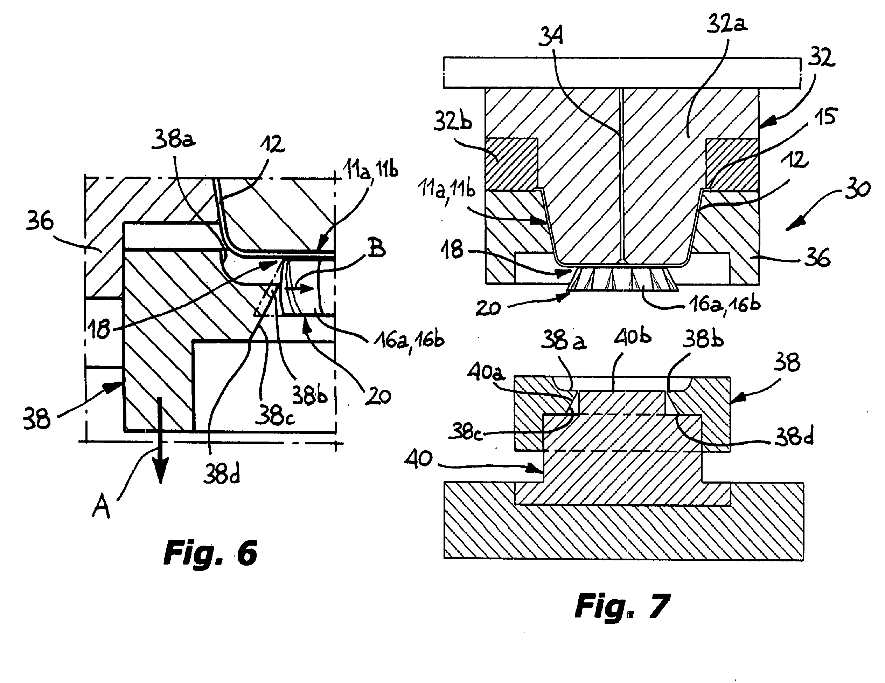

Then, the intermediate mold 38 is moved away axially with respect to the unit formed by the female mold 36 and the first male mold 32, so as to make the whole undercut portion 16a or 16b free. During this movement of the intermediate mold 38, which takes place along the direction indicated by arrow A in figure 6, the undercut portion 16a or 16b undergoes an elastic contraction transverse to the general axis of the container 11a or 11b, as shown by arrow B in figure 6, in order to allow the undercut portion 16a or 16b to slide along the corner 38b as a result of the axial movement of the intermediate mold 38, in spite of the flared shape of the portion 16a or 16b. After the corner 38b has been passed, the portion 16a or 16b goes back to its non-deformed flared configuration.

Afterwards, the female mold 36 is moved away axially from the first male mold 32 in order to make free the outer side surface of the cup portion 12 of the container 11a or 11b, as well as the lower portion of its peripheral collar 15.

Since in this condition the container 11a or 11b is associated only with the first male mold 32, ejection means can be activated which, as a result of the delivery of a jet of pressurized air through the duct 34, allow the mold 30 to be separated from the container 11a or 11b just molded. In the practical case, holding means may be prearranged, for example of the suction-cup type, not shown, in order to allow to hold the container 11a or 11b just molded, immediately after the ejection thereof from the mold 30, with the aim of carrying it at a zone external to the mold 30, so that it can undergo additional operations.

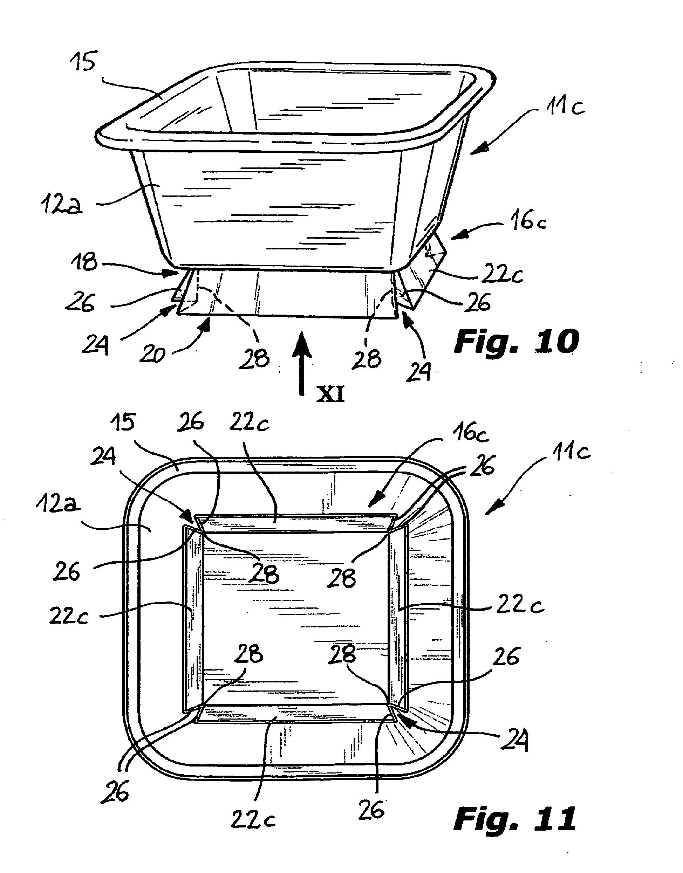

In figures 10 and 11, another modification of a container according to the invention is shown, having a substantially square shape. In these figures, equal or similar reference numerals have been used to indicate parts corresponding to those of the figures previously described.

In particular, the container of this modification, indicated by reference numeral 11c, comprises a cup portion 11a whose cross-section is substantially square and has rounded corners, provided with a peripheral collar 15 having a corresponding shape, which is intended for applying a closure cover, usually of the type which can be opened by peeling off.

The flared support portion 16c of the container 11c, which is formed as an undercut with respect to the portion 11c, extends between the respective restricted section 18 and the enlarged end section 20, so as to have a general corrugated shape, tapered between the aforesaid sections 18 and 20.

In particular, the support portion 16c is defined by four segments each of which consists of a respective flat sheet 22c in the form of an elongated fin, parallel to a respective side of the cup portion 12c and tilted with respect to the general axis of the container 11c. Triangular gussets 26, one edge of which is connected to a corresponding edge of the triangular gussets 26 of an adjacent flat sheet 22c, extend from both the longitudinal ends of the flat sheets 22c, in such a manner that a corner 28 is formed which faces the inside of the support portion 16c. The triangular gussets 26 of two adjacent sheets 22c bound in pairs radial recesses 24 of the support portion 16c, four recesses 24 being made at positions corresponding to the corners of the cup portion 12c.

In this manner, the support portion 16c, defined by a plurality of wall segments 22c separated by the recesses 24, constitutes a substantially corrugated formation which is easily flexible and susceptible, in particular, to undergo at least an elastic contraction in a direction transverse to the general axis of the container 11c.

The molds as well as the molding process of the container 11c are fully analogous to those described above with reference to the containers 11a and 11b.

## Claims

1. Molded container of plastic material, comprising a flared and undercut portion (16a; 16b; 16c) which extends between a restricted section (18) and an enlarged end section (20),
**characterized in that** said undercut portion (16a; 16b; 16c) has a generally corrugated shape which includes a plurality of wall segments (22a; 22b; 22c) separated to each other by recesses (24), so that it can undergo an elastic contraction in a direction transverse to the general axis of the container (11a; 11b; 11c).

2. Container according to claim 1, **characterized in that** said generally corrugated undercut portion (16a; 16b; 16c) tapers between said restricted section (18) and said enlarged end section (20).

3. Container according to claim 2, **characterized in that** each recess (24) interposed between adjacent wall segments (22a; 22b) has a corner (28) substantially parallel to the general axis of the container (11a; 11b; 11c), which faces a central zone of the container (11a; 11b; 11c) and is tangent to a cylinder coaxial with the axis of the container (11a; 11b; 11c).

4. Container according to any one of claims 1 to 3, **characterized in that** each of said wall segments consists of a flat sheet (22a; 22c) tilted with respect to the general axis of the container (11a; 11c), each flat sheet (22a; 22c) having a pair of side edges from each of which a respective triangular gusset (26) extends, adapted to bound a side of a recess (24) interposed between a pair of adjacent flat sheets (22a; 22c).

5. Container according to any one of claims 1 to 3, **characterized in that** each of said wall segments consists of a sheet (22b) substantially shaped as a frustoconical lobe, whose side ends bound a side of a recess (24) interposed between a pair of adjacent shaped sheets (22b).

6. Container according to claim 4 or 5, **characterized in that** it has a substantially circular symmetry (11a; 11b).

7. Container according to claim 6, **characterized in that** each of said sheets (22a; 22b) has a portion tangent to a cone coaxial with the axis of the container (11a; 11b).

8. Container according to claim 4, **characterized in that** it has a square shape (11c).

9. Container according to any one of claims 1 to 8, **characterized in that** said undercut portion (16a; 16b; 16c) constitutes a support base of the container (11a; 11b; 11c).

10. Container according to claim 9, **characterized in that** a cup shaped container (12; 12a) is superimposed to said support base (16a; 16b; 16c).

11. Process for manufacturing a molded container of plastic material comprising a flared undercut portion (16a; 16b; 16c) which extends between a restricted section (18) and an enlarged end section (20),
**characterized in that** it comprises the following operations:
- arranging a plurality of molds (32, 36, 38, 40) adapted to form, in the closed condition, a molding cavity susceptible of bounding the shape of the container (11a; 11b; 11c), said undercut portion (16a; 16b; 16c) being bounded by a hollow portion defining a generally corrugated shape which comprises a plurality of wall segments (22a; 22b; 22c) separated to each other by recesses (24),
- introducing in said molding cavity a plastic material, and
- opening said molds (32, 36, 38, 40) by means of relative movements only in the direction of a general axis of the container (11a; 11b; 11c) and according to a sequence of predetermined steps, in order to cause, during the extraction of the undercut portion (16a; 16b; 16c) of the container (11a; 11b; 11c), an elastic contraction of such an undercut portion (16a; 16b; 16c) along a direction transverse to the general axis of the container (11a; 11b; 11c).

12. Process according to claim 11, **characterized in that** said molds include a first male mold (32) and a female mold (36) intended to bound a substantial portion of a cup portion (12; 12a) of the container (11a; 11b; 11c), a second male mold (40) intended to bound at least an inner surface of the undercut portion (16a; 16b; 16c), and an intermediate mold intended to bound at least the outer surface of the undercut portion (16a; 16b; 16c), and **in that** said molds (32, 36, 38, 40), starting from the closed condition thereof, are moved in a sequence according to the following steps:
- the second male mold (40) is moved away axially from the intermediate mold (38), the female mold (36) and the first male mold (32), in order to make free the inner surface of the undercut portion (16a; 16b; 16c) of the container (11a; 11b; 11c),
- the intermediate mold (38) is moved away axially from the female mold (36) and the first male mold (32), in order to make the whole undercut portion (16a; 16b; 16c) free, a radial contraction of the undercut portion (16a; 16b; 16c) being caused during such a moving away of the intermediate mold (38), and
- the female mold (36) is moved away axially from the first male mold (32) in order to make free the outer surface of the cup portion (12; 12a) of the container.

13. Process according to claim 12, **characterized in that** it comprises the operation of operating ejecting means (34) of the container (11a; 11b; 11c), associated with the first male mold (32), with the aim of separating the container (11a; 11b; 11c) from said molds (32, 36, 38, 40).

14. Mold for manufacturing a molded container of plastic material comprising a flared undercut portion (16a; 16b; 16c) which extends between a restricted section (18) and an enlarged end section (20), **characterized in that** it includes:
- a first male mold (32) intended to bound an inner surface of a cup portion (12; 12a) of the container (11a; 11b; 11c),
- a female mold (36), coaxial with the first male mold (32), intended to bound at least a main portion of the outer surface of the cup portion (12; 12a) of the container (11a; 11b; 11c),
- an intermediate mold (38), coaxial with the first male mold (32) and with the female mold (36), having a restricted end section (38b) and an enlarged end section (38d), intended to bound at least an outer surface of said undercut portion (16a; 16b; 16c), and
- a second male mold (40) intended to bound at least an inner surface of the undercut portion (16a; 16b; 16c),
wherein said intermediate mold (38) and said second male mold (40) bound, in their closed condition, a molding cavity which defines a portion of the container (11a; 11b; 11c) having a general corrugated shape comprising a plurality of wall segments (22a; 22b; 22c) separated to each other by recesses (24).

15. Mold according to claim 14, **characterized in that** said molds (32, 36, 38, 40) are movable with respect to each other only in an axial direction of the container (11a; 11; 11c).

16. Mold according to claim 15, **characterized in that** the molding cavity which defines said generally corrugate shaped portion (16a; 16c), bounds a plurality of wall segments each of which consists of a flat sheet (22a; 22c) tilted with respect to the general axis of the container (11a; 11c), each flat sheet (22a; 22c) having a pair of side edges from each of which a respective triangular gusset (26) extends, which is adapted to bound a side of a recess (24) interposed between a pair of adjacent flat sheets (22a; 22c).

17. Mold according to claim 15, **characterized in that** the molding cavity defining said generally corrugate shaped portion (16b), bounds a plurality of wall segments each of which consists of a sheet (22b) shaped as a frustoconical lobe, the side ends of each of such sheets bounding a side of a recess (24) interposed between a pair of adjacent shaped sheets (22b).

18. Mold according to claim 16 or 17, **characterized in that** ejection means (34) for ejecting the container (11a; 11b; 11c) are associated to the first male mold (32).

## Patentansprüche

1. Formgepresster Behälter aus Kunststoff mit einem konisch ausgesenkten, hinterschnittenen Teil (16a; 16b; 16c) zwischen einem eingeschnürten Bereich (18) und einem erweiterten Endbereich (20), **dadurch gekennzeichnet, dass** der hinterschnittene Teil (16a; 16b; 16c) eine gewellte Faltenform mit einer Reihe von Wandsegmenten (22a; 22b; 22c) hat, die durch Vertiefungen (24) voneinander getrennt sind derart, dass sie in einer zur Hauptachse des Behälters (11a; 11b; 11c) radialen Richtung elastisch kontrahierbar sind.

2. Behälter nach Anspruch 1, **dadurch gekennzeichnet, dass** der hinterschnittene, faltenbalgartige Teil (16a; 16b; 16c) zwischen dem eingeschnürten Bereich (18) und dem erweiterten Endbereich (20) konisch verjüngt ist.

3. Behälter nach Anspruch 2, **dadurch gekennzeichnet, dass** jede Vertiefung (24) zwischen den aufeinander folgenden Wandsegmenten (22a; 22b) eine zur Hauptachse des Behälters (11a; 11b; 11c) im wesentlichen parallel ausgerichtete Kante (28) hat, die zur Mitte des Behälters (11a; 11b; 11c) gerichtet ist und eine Tangente eines Zylinders bildet, der koaxial zur Achse des Behälters (11a; 11b; 11c) angeordnet ist.

4. Behälter nach einem der vorhergehenden Ansprüche, **dadurch gekennzeichnet, dass** jedes Wandsegment aus einer ebenen Wandfläche (22a; 22c) besteht, die zur Hauptachse des Behälters (11a; 11c) geneigt angeordnet ist und ein Paar seitlicher Ränder hat, von denen sich jeweils eine dreieckige Eckplatte (26) erstreckt, die eine Seite einer Vertiefung (24) zwischen einem Paar aufeinander folgender Wandflächen (22a; 22c) begrenzt.

5. Behälter nach einem der Ansprüche 1 bis 3, **dadurch gekennzeichnet, dass** jedes Wandsegment aus einer Buckelfläche (22b) besteht, die im wesentlichen aus einem kegelstumpfförmigen Vorsprung besteht, dessen seitliche Enden eine Seite einer Vertiefung (24) zwischen einem Paar aufeinander folgender Buckelflächen (22b) begrenzen.

6. Behälter nach Anspruch 4 oder 5, **dadurch gekennzeichnet, dass** dieser eine im wesentlichen kreisförmige Symmetrie (11a; 11b) hat.

7. Behälter nach Anspruch 6, **dadurch gekennzeichnet, dass** jede der Flächen (22a; 22b) einen zu einem Konus tangentialen Bereich hat, der koaxial zur Achse des Behälters (11a; 11b) ausgerichtet ist.

8. Behälter nach Anspruch 4, **dadurch gekennzeichnet, dass** dieser eine Rechteckform (11c) hat.

9. Behälter nach einem der vorhergehenden Ansprüche, **dadurch gekennzeichnet, dass** der hinterschnittene Teil (16a; 16b; 16c) einen Stützfuß für den Behälter (11a; 11b; 11c) bildet.

10. Behälter nach Anspruch 9, **dadurch gekennzeichnet, dass** über dem Stützfuß (16a; 16b; 16c) ein becherförmiger Behälter (12; 12a) angeordnet ist.

11. Verfahren zur Herstellung eines formgepressten Behälters aus Kunststoff mit einem konisch ausgesenkten, hinterschnittenen Teil (16a; 16b; 16c) zwischen einem eingeschnürten Bereich (18) und einem erweiterten Endbereich (20), **gekennzeichnet durch** die folgenden Arbeitsschritte:
- Anordnen einer Reihe von Formteilen (32, 36, 38, 40), mit denen in der geschlossenen Stellung ein Formraum gebildet wird, der die Form des Behälters (11a; 11b; 11c) vorgibt, wobei der hinterschnittene Teil (16a; 16b; 16c) **durch** einen Teil des Formraumes begrenzt wird, der eine im wesentlichen faltenbalgartige Form mit einer Mehrzahl von Wandsegmenten (22a; 22b; 22c) definiert, die **durch** Vertiefungen (24) voneinander getrennt sind,
- Zuführen eines Kunststoffmaterials in den Formraum und
- Öffnen der Formteile (32, 36, 38, 40) **durch** Relativbewegung ausschließlich in der Richtung einer Hauptachse des Behälters (11a; 11b; 11c) und in einer vorbestimmten Phasenfolge, so dass beim Herausnehmen des hinterschnittenen Teils (16a; 16b; 16c) des Behälters (11a; 11b; 11c) eine elastische Kontraktion der hinterschnittenen Teile (16a; 16b; 16c) in einer Richtung quer zur Hauptachse des Behälters (11a; 11b; 11c) bewirkt wird.

12. Verfahren nach Anspruch 11, **dadurch gekennzeichnet, dass** die Formteile ein erstes männliches Formteil (32) und ein weibliches Formteil (36) umfassen, die dazu dienen, einen wesentlichen Bereich des tassenförmigen Teils (12; 12a) des Behälters (11a; 11b; 11c) zu begrenzen, ferner ein zweites männliches Formteil (40), das dazu dient, wenigstens eine Innenfläche des hinterschnittenen Teils (16a; 16b; 16c) zu begrenzen, sowie ein Zwischenformteil (38), das dazu dient, wenigstens die Außenseite des hinterschnittenen Teils (16a; 16b; 16c) zu begrenzen, und dass die Formteile (32, 36, 38; 40) mit Beginn ihrer geschlossenen Anordnung in den folgenden Arbeitsschritten nacheinander verstellt werden:
- das zweite männliche Formteil (40) wird axial auf Abstand zu dem Zwischenformteil (38), dem weiblichen Formteil (36) und dem ersten männlichen Formteil (32) gebracht, um die Innenfläche des hinterschnittenen Teils (16a; 16b; 16c) des Behälters (11a; 11b; 11c) freizugeben,
- das Zwischenformteil (38) wird axial von dem weiblichen Formteil (36) und dem ersten männlichen Formteil (32) wegbewegt, um die Innenfläche des hinterschnittenen Teils (16a; 16b; 16c) des Behälters (11a; 11b; 11c) freizugeben,
- das Zwischenformteil (38) wird von dem weiblichen Formteil (36) und dem ersten männlichen Formteil (32) axial wegbewegt, um den gesamten hinterschnittenen Teil (16a; 16b; 16c) freizugeben, wobei während dieser Wegbewegung von dem Zwischenformteil (38) eine radiale Kontraktion des hinterschnittenen Teils (16a; 16b; 16c) erzeugt wird,
- das weibliche Formteil (36) wird axial von dem ersten männlichen Formteil (32) entfernt, um die Außenseite des tassenförmigen Teils (12; 12a) des Behälters freizugeben.

13. Verfahren nach Anspruch 12, **dadurch gekennzeichnet, dass** Auswerfermittel (34) für den Behälter (11a; 11b; 11c) aktiviert werden, die mit dem ersten männlichen Formteil (32) verbunden sind, um dadurch den Behälter (11a; 11b; 11c) von den Formteilen (32, 36, 38, 40) zu trennen.

14. Form zur Herstellung eines formgepressten Behälters aus Kunststoff mit einem konisch ausgesenkten, hinterschnittenen Teil (16a; 16b; 16c) zwischen einem eingeschnürten Bereich (18) und einem erweiterten Endbereich (20), **gekennzeichnet durch**
- ein erstes männliches Formteil (32) zur Begrenzung der Innenfläche eines tassenförmigen Teils (12; 12a) des Behälters (11a; 11b; 11c),
- ein weibliches Formteil (36), das koaxial zu dem ersten männlichen Formteil (32) angeordnet ist und zur Begrenzung wenigstens eines überwiegenden Bereiches der Außenfläche des tassenförmigen Teils (12; 12a) des Behälters (11a; 11b; 11c) dient,
- ein Zwischenformteil (38), das koaxial zu dem ersten männlichen Formteil (32) und dem weiblichen Formteil (36) angeordnet ist und einen verengten Endabschnitt (38b) sowie einen erweiterten Endabschnitt (38d) hat, um wenigstens eine Außenfläche des hinterschnittenen Teils (16a; 16b; 16c) zu begrenzen,
- ein zweites männliches Formteil (40), das dazu dient, wenigstens eine Innenfläche des hinterschnittenen Teils (16a; 16b; 16c) zu begrenzen,
wobei das Zwischenformteil (38) und das zweite männliche Formteil (40) in ihrer geschlossenen Stellung einen Formraum bilden, der einen Abschnitt des Behälters (11a; 11b; 11c) einer im wesentlichen faltenbalgartigen Ausbildung definiert, die mehrere Wandsegmente (22a; 22b; 22c) hat, die **durch** Vertiefungen (24) voneinander getrennt sind.

15. Form nach Anspruch 14, **dadurch gekennzeichnet, dass** die Formteile (32, 36, 38, 40) relativ zueinander nur in Axialrichtung des Behälters (11a; 11b; 11c) beweglich sind.

16. Form nach Anspruch 15, **dadurch gekennzeichnet, dass** der Formraum, der den im wesentlichen faltenbalgförmigen Abschnitt (16a; 16c) definiert, eine Reihe von Wandsegmenten begrenzt, von denen jedes durch eine ebene Fläche (22a; 22c) gebildet wird, die zur Hauptachse des Behälters (11a; 11c) geneigt ist, wobei jede ebene Wandfläche (22a; 22c) ein Paar seitlicher Kanten hat, von der sich jeweils eine dreieckige Eckplatte (26) erstreckt, die einen Schenkel einer Vertiefung (24) begrenzt, welche zwischen einem Paar nebeneinanderliegender ebener Wandflächen (22a; 22c) liegt.

17. Form nach Anspruch 15, **dadurch gekennzeichnet, dass** der Formraum, der den faltenbalgartigen Teil (16b) definiert, eine Reihe von Wandsegmenten begrenzt, die jeweils aus einer kegelstumpffömigen Buckelfläche (22b) besteht, deren seitliche Enden jeweils einen Schenkel einer Windung (24) zwischen einem Paar der aufeinander folgenden Wandflächen (22b) begrenzen.

18. Form nach Anspruch 16 oder 17, **dadurch gekennzeichnet, dass** dem ersten männlichen Formteil (32) Auswurfmittel (34) zum Ausstoßen des Behälters (11a; 11b; 11c) zugeordnet sind.

## Revendications

1. Récipient moulé en matière plastique, comprenant une partie évasée et une contre-dépouille (16a ; 16b ; 16c) qui s'étend entre une portion restreinte (18) et une portion d'extrémité élargie (20),
**caractérisé en ce que** ladite partie en contre-dépouille (16a ; 16b ; 16c) a une forme généralement ondulée qui inclut une pluralité de segments de paroi (22a ; 22b ; 22c) séparés les uns des autres par des évidements (24), de manière à pouvoir subir une contraction élastique dans une direction transversale à l'axe général du récipient (11a ; 11b ; 11c).

2. Récipient selon la revendication 1, **caractérisé en ce que** ladite partie en contre-dépouille généralement ondulée (16a ; 16b ; 16c) se rétrécit entre ladite portion restreinte (18) et ladite portion d'extrémité élargie (20).

3. Récipient selon la revendication 2, **caractérisé en ce que** chaque évidement (24) interposé entre des segments de paroi adjacents (22a ; 22b) présente un angle (28) sensiblement parallèle à l'axe général du récipient (11a ; 11b; 11c), qui fait face à une zone centrale du récipient (11a ; 11b ; 11c) et est tangent à un cylindre coaxial à l'axe du récipient (11a ; 11b ; 11c).

4. Récipient selon l'une quelconque des revendications 1 à 3, **caractérisé en ce que** chacun desdits segments de paroi est constitué par une feuille plate (22a ; 22c) inclinée par rapport à l'axe général du récipient (11a, 11c), chaque feuille plate (22a ; 22c) ayant une paire de bords latéraux à partir de chacun desquels s'étend un gousset triangulaire respectif (26), apte à délimiter un côté d'un évidement (24) interposé entre une paire de feuilles plates adjacentes (22a ; 22c).

5. Récipient selon l'une quelconque des revendications 1 à 3, **caractérisé en ce que** chacun desdits segments de paroi se compose d'une feuille (22b), ayant sensiblement la forme d'un lobe tronconique, dont les extrémités latérales délimitent un côté d'un évidement (24) interposé entre une paire de feuilles adjacentes formées (22b).

6. Récipient selon la revendication 4 ou la revendication 5, **caractérisé en ce qu'**il présente une symétrie sensiblement circulaire (11a ; 11b).

7. Récipient selon la revendication 6, **caractérisé en ce que** chacune desdites feuilles (22a ; 22b) a une partie tangente à un cône coaxial avec l'axe du récipient (11a ; 11b) .

8. Récipient selon la revendication 4, **caractérisé en ce qu'**il a une forme carrée (11c).

9. Récipient selon l'une quelconque des revendications 1 à 8, **caractérisé en ce que** ladite partie en contre-dépouille (16a ; 16b ; 16c) constitue une embase d'appui pour le récipient (11a ; 11b ; 11c).

10. Récipient selon la revendication 9, **caractérisé en ce qu'**un récipient en forme de coupelle (12 ; 12a) est superposé à ladite embase d'appui (16a ; 16b ; 16c).

11. Procédé de fabrication d'un conteneur moulé en matière plastique comprenant une partie en contre-dépouille évasée (16a ; 16b ; 16c) qui s'étend entre une portion restreinte (18) et une portion d'extrémité élargie (20),
**caractérisé en ce qu'**il comprend les opérations suivantes :
- agencement d'une pluralité de moules (32, 36, 38, 40) adaptée pour former, à l'état fermé, une cavité de moulage apte à une délimitation de la forme du récipient (11a ; 11b; 11c), ladite partie en contre-dépouille (16a ; 16b ; 16c) étant délimitée par une partie en creux définissant une forme générale ondulée, qui comprend une pluralité de segments de paroi (22a ; 22b ; 22c) séparés les uns des autres par des évidements (24),
- introduction dans ladite cavité de moulage d'une matière plastique, et
- ouverture dudit moule (32, 36, 38, 40) au moyen de mouvements relatifs dans la direction d'un axe général du récipient (11a ; 11b ; 11c) et selon une séquence d'étapes prédéterminées, afin de provoquer, lors de l'extraction de la partie en contre-dépouille (16a; 16b ; 16c) du récipient (11a ; 11b; 11c), une contraction élastique d'une telle partie en contre-dépouille (16a ; 16b ; 16c) selon une direction transversale à l'axe général du conteneur (11a; 11b; 11c).

12. Procédé selon la revendication 11, **caractérisé en ce que** lesdits moules comprennent un premier moule mâle (32) et un moule femelle (36) destinés à délimiter une partie substantielle d'une partie en coupelle (12 ; 12a) du récipient (11a, 11b; 11c ), un deuxième moule mâle (40) destiné à délimiter au moins une surface intérieure de la partie en contre-dépouille (16a ; 16b ; 16c), et un moule intermédiaire destiné à délimiter au moins la surface extérieure de la partie en contre-dépouille (16a ; 16b ; 16c), et **en ce que** lesdits moules (32, 36, 38, 40), à partir de l'état fermé de ceux-ci, sont déplacés selon une séquence conforme aux étapes suivantes :
- le deuxième moule mâle (40) est déplacé axialement en éloignement du moule intermédiaire (38), du moule femelle (36) et du premier moule mâle (32), de manière à rendre libre la surface intérieure de la partie en contre-dépouille (16a; 16b, 16c) du récipient (11a ; 11b ; 11c),
- le moule intermédiaire (38) est déplacé axialement en éloignement du moule femelle (36) et du premier moule mâle (32), afin de rendre libre l'ensemble de la partie en contre-dépouille (16a ; 16b ; 16c), une contraction radiale de la partie en contre-dépouille (16a ; 16b ; 16c) étant provoquée lors d'un tel déplacement en éloignement du moule intermédiaire (38), et
- le moule femelle (36) est déplacé axialement en éloignement du premier moule mâle (32) de manière à rendre libre la surface extérieure de la partie en coupelle (12 ; 12a) du récipient.

13. Procédé selon la revendication 12, **caractérisé en ce qu'**il comprend le fonctionnement de moyens d'éjection d'actionnement (34) du récipient (11a ; 11b; 11c), associés au premier moule mâle (32), dans le but de séparer le récipient (11a ; 11b ; 11c) à partir desdits moules (32, 36, 38, 40).

14. Moule pour fabriquer un récipient de matière plastique moulée comportant une partie en contre-dépouille évasée (16a ; 16b ; 16c) qui s'étend entre une portion restreinte (18) et une portion d'extrémité élargie (20), **caractérisé en ce qu'**il comprend :
- un premier moule mâle (32) destiné à délimiter une surface intérieure d'une partie en coupelle (12 ; 12a) du récipient (11a ; 11b ; 11c),
- un moule femelle (36), coaxial au premier moule mâle (32), destiné à délimiter au moins une partie principale de la surface extérieure de la partie en coupelle (12 ; 12a) du récipient (11a ; 11b ; 11c),
- un moule intermédiaire (38), coaxial au premier moule mâle (32) et au moule femelle (36), ayant une portion d'extrémité restreinte (38b) et une portion d'extrémité élargie (38d), destiné à délimiter au moins une surface extérieure de ladite partie en contre-dépouille (16a ; 16b ; 16c), et
- un deuxième moule mâle (40) destiné à délimiter au moins une surface intérieure de la partie en contre-dépouille (16a ; 16b ; 16c),
dans lequel ledit moule intermédiaire (38) et ledit deuxième moule mâle (40) délimitent, dans leur état fermé, une cavité de moulage qui définit une partie du récipient (11a ; 11b; 11c) ayant une forme ondulée générale comprenant une pluralité de segments de paroi (22a ; 22b ; 22c) séparés les uns des autres par des évidements (24).

15. Moule selon la revendication 14, **caractérisé en ce que** lesdits moules (32, 36, 38, 40) sont mobiles l'un par rapport à l'autre uniquement dans une direction axiale du récipient (11a ; 11b ; 11c).

16. Moule selon la revendication 15, **caractérisé en ce que** la cavité de moulage qui définit ladite partie de forme généralement ondulée (16a; 16c), délimite une pluralité de segments de paroi dont chacun est constitué d'une feuille plate (22a ; 22c) inclinée par rapport au grand axe du récipient (11a ; 11c), chaque feuille plate (22a ; 22c) ayant une paire de bords latéraux à partir de chacun desquels s'étend un gousset triangulaire respectif (26), qui est adapté pour délimiter un côté d'un évidement (24) interposé entre une paire de feuilles plates adjacentes (22a ; 22c).

17. Moule selon la revendication 15, **caractérisé en ce que** la cavité de moulage définissant ladite partie en forme généralement ondulée (16b), délimite une pluralité de segments de paroi dont chacun est constitué d'une feuille (22b) ayant la forme d'un lobe tronconique, les extrémités latérales de chacune de ces feuilles délimitant le côté d'un évidement (24) interposé entre une paire de feuilles adjacentes formées (22b).

18. Moule selon la revendication 16 ou la revendication 17, **caractérisé en ce que** des moyens d'éjection (34) destinés à éjecter le récipient (11a ; 11b; 11c) sont associés au premier moule mâle (32).
